# EUROPEAN PATENT APPLICATION

(11) **EP 3 131 176 A1**
(43) Date of publication of application: **15.02.2017**
(21) Application number: 15768004.2
(22) Date of filing: 12.03.2015
(51) Int. Cl.: H02J 50/00

(54) **POWER TRANSMISSION DEVICE AND NON-CONTACT POWER TRANSMISSION APPARATUS**

(30) Priority: 25.03.2014 JP 2014061830
(71) Applicant: Kabushiki Kaisha Toyota Jidoshokki, Kariya-shi, Aichi 448-8671 (JP)
(72) Inventor: OSHIMA, Atsushi, Kariya-shi Aichi 448-8671 (JP); WAKISAKA, Shinya, Kariya-shi Aichi 448-8671 (JP); TOGANO, Hiroki, Kariya-shi Aichi 448-8671 (JP)
(74) Representative: TBK
(86) International application number: PCT/JP2015/057270
(87) International publication number: WO 2015/146605

(57) **Abstract**

This power transfer device is provided with an alternating current power supply, primary-side coil, control unit, control power supply, and switch. The alternating current power supply has a first converter that converts external power into first direct current power and a second converter that outputs power by converting direct current power into alternating current power at a predetermined frequency. The second converter outputs, as alternating current power, first alternating current power in the cases where the first direct current power is inputted from the first converter, and outputs, as alternating current power, a second alternating current power having a power value smaller than that of the first alternating current power in the cases where second direct current power is inputted from the control power supply.

## Description

### TECHNICAL FIELD

The present invention relates to a power transfer device and a wireless power transfer apparatus.

### BACKGROUND ART

A known wireless power transfer apparatus does not use a power supply cord and a power transfer cable. The wireless power transfer apparatus includes, for example, an alternating current power supply that outputs alternating current power having a predetermined frequency, a power transfer device including a primary coil that receives the alternating current power, and a power reception device including a secondary coil capable of receiving alternating current power from the primary coil through wireless connection. Refer to, for example, patent document 1. In such a wireless power transfer apparatus, for example, when the primary coil and the secondary coil magnetically resonate, alternating current power is transferred from the power transfer device to the power reception device through wireless connection. Further, in patent document 1, the power reception device is installed in a vehicle. The alternating current power received by the power reception device is used to charge a power storage device installed in the vehicle.

### PRIOR ART DOCUMENT

### PATENT DOCUMENT

Patent Document 1: Japanese Laid-Open Patent Publication No. 2009-106136

### SUMMARY OF THE INVENTION

### PROBLEMS THAT ARE TO BE SOLVED BY THE INVENTION

For example, before starting power transfer at full scale, there may be a need to determine whether or not the transmission of power from the power transfer device to the power reception device is normal by outputting alternating current power from the alternating current power supply. Taking into account the burden on the alternating current power supply and the power loss, it is preferred that the power value of the alternating current power output from the alternating current power supply be small for the determination. In contrast, to shorten the time for charging the power storage device, it is preferred that the power value of the alternating current power output from the alternating current power supply be large when the power storage device is charged.

For example, there may be a case in which the alternating current power supply includes a first converter that converts external power into direct current power and a second converter that converts direct current power into the alternating current power. In such a case, to satisfy the contradicting demands described above, the power value of the direct current power converted by the first converter may be changed so that the power value of the alternating current power is variable. However, there is a limit to the control for changing the power value in the first converter. Thus, the contradicting demands cannot be sufficiently answered.

It is an object of the present invention to provide a power transfer device and a wireless power transfer apparatus that are capable of transferring alternating current power having different power values in a preferred manner.

### MEANS FOR SOLVING THE PROBLEM

A first aspect that achieves the above object provides a power transfer device configured to transfer alternating current power to a secondary coil of a power reception device through wireless communication. The power transfer device includes an alternating current power supply, a primary coil, a controller, a control power supply, and a switch. The alternating current power supply includes a first converter that converts external power into first direct current power and a second converter that converts direct current power into alternating current power having a predetermined frequency and outputs the alternating current power. The primary coil receives the alternating current power. The controller controls the power transfer device. The controller is arranged in the power transfer device. The control power supply supplies power to the controller. The control power supply is capable of outputting second direct current power, which has a smaller power value than the first direct current power, to the second converter. The switch switches an input source of power of the second converter between the first converter and the control power supply. The second converter outputs first alternating current power as the alternating current power when receiving the first direct current power from the first converter and outputs second alternating current power, which has a smaller power value than the first alternating current power, as the alternating current power when receiving the second direct current power from the control power supply.

A second aspect that achieves the above object provides a wireless power transfer apparatus that transfers alternating current power from a power transfer device to a power reception device through wireless connection. The wireless power transfer apparatus includes an alternating current power supply, a primary coil, a secondary coil, a controller, a control power supply, and a switch. The alternating current power supply is arranged in the power transfer device. The alternating current power supply includes a first converter that converts external power into first direct current power and a second converter that converts direct current power into alternating current power having a predetermined frequency and outputs the alternating current power. The primary coil receives the alternating current power. The primary coil is arranged in the power transfer device. The secondary coil is configured to receive the alternating current power received by the primary coil through wireless connection. The secondary coil is arranged in the power reception device. The controller is arranged in the power transfer device. The control power supply supplies power to the controller. The control power supply is configured to output second direct current power that has a smaller power value than the first direct current power. The switch switches an input source of power of the second converter between the first converter and the control power supply. The second converter outputs first alternating current power as the alternating current power when receiving the first direct current power from the first converter and outputs second alternating current power, which has a smaller power value than the first alternating current power, as the alternating current power when receiving the second direct current power from the control power supply.

### BRIEF DESCRIPTION OF THE DRAWINGS

Fig. 1 is a block diagram showing the electrical configuration of a power transfer device and a wireless power transfer apparatus.
Fig. 2 is a flowchart showing a charge control process performed by a power transfer controller.
Fig. 3 is a graph showing the relationship of a set power value and an output power value.
Fig. 4 is a block diagram showing a power transfer device of another example.

### EMBODIMENTS OF THE INVENTION

One embodiment of a power transfer device (power transfer apparatus) and a wireless power transfer apparatus (wireless power transfer system) will now be described.

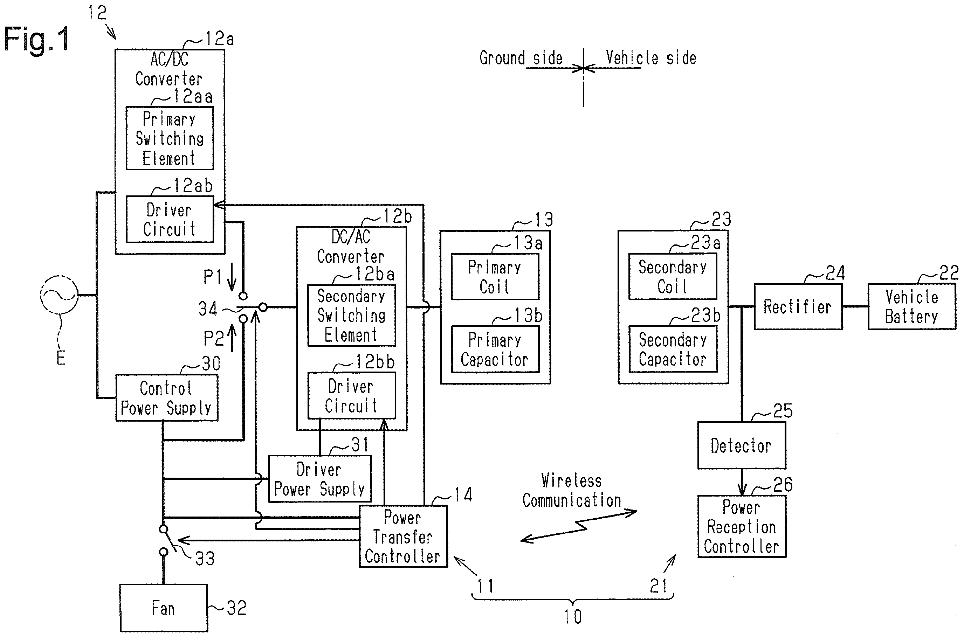

As shown in Fig. 1, a wireless power transfer apparatus 10 includes a power transfer device 11 and a power reception device 21 between which power is transferable through wireless connection. The power transfer device 11 is arranged on the ground, and the power reception device 21 is installed in a vehicle. The power transfer device 11 is also referred to as a ground device or a primary device. The power reception device 21 is also referred to as a vehicle device or a secondary device.

The power transfer device 11 includes an alternating current power supply 12 capable of outputting alternating current power that has a predetermined frequency. The alternating current power supply 12 is, for example, a voltage source. The alternating current power supply 12 is configured to convert system power that is received as external power from a system power supply E, which serves as infrastructure, into alternating current power and output the converted alternating current power.

More specifically, the alternating current power supply 12 includes an AC/DC converter 12a serving as a first converter and a DC/AC converter 12b serving as a second converter. The AC/DC converter 12a converts system power that is received from the system power supply E into direct current power. When receiving direct current power, the DC/AC converter 12b converts the direct current power into alternating current power and outputs the converted alternating current power.

The AC/DC converter 12a is, for example, of a step-up type. The AC/DC converter 12a is configured to output direct current power (hereinafter referred to as first direct current power) having a predetermined first direct current power value P1 (for example, several kW) when receiving system power of 200 V. More specifically, the AC/DC converter 12a includes a first switching element 12aa. The AC/DC converter 12a outputs the first direct current power by cyclically activating and deactivating the first switching element 12aa at a certain duty ratio (pulse width) that is determined in advance. The first direct current power has a voltage value of, for example, several hundred V. A converter having rated power that is higher than the first direct current power value P1 by a predetermined margin is used as the AC/DC converter 12a. The AC/DC converter 12a includes a driver circuit 12ab that operates the first switching element 12aa.

The AC/DC converter 12a is configured to change the power value of the output direct current power by changing, or controlling, the duty ratio for activating and deactivating the first switching element 12aa. More specifically, the AC/DC converter 12a is configured to output direct current power within a range from a minimum power value Pmin to a maximum power value Pmax. In this case, the first direct current power value P1 is a value between the minimum power value Pmin and the maximum power value Pmax. The rated power of the AC/DC converter 12a is the maximum power value Pmax.

The DC/AC converter 12b includes a second switching element 12ba and a driver circuit 12bb that operates the second switching element 12ba. The driver circuit 12bb converts direct current power into alternating current power by cyclically activating and deactivating the second switching element 12ba.

The alternating current power output from the alternating current power supply 12 is transferred to the power reception device 21 through wireless connection. The transferred power is used to charge a vehicle battery 22 (power storage device) arranged in the power reception device 21. More specifically, the wireless power transfer apparatus 10 includes a power transfer unit 13, which is arranged in the power transfer device 11, and a power reception unit 23, which is arranged in the power reception device 21, to transfer power between the power transfer device 11 and the power reception device 21.

The power transfer unit 13 and the power reception unit 23 have the same configuration and are both configured to magnetically resonate. More specifically, the power transfer unit 13 includes a resonant circuit including a primary coil 13a and a primary capacitor 13b that are connected in parallel to each other, and the power reception unit 23 includes a resonant circuit including a secondary coil 23a and a secondary capacitor 23b that are connected in parallel to each other. The two resonant frequency circuits have the same resonant frequency.

In such a configuration, if the power transfer unit 13 (primary coil 13a) receives alternating current power when the relative positions of the power transfer unit 13 and the power reception unit 23 allow for magnetic resonance, the power transfer unit 13 and the power reception unit 23 (secondary coil 23a) magnetically resonate. This allows the power reception unit 23 to receive some of the energy from the power transfer unit 13. That is, the power reception unit 23 receives alternating current power from the power transfer unit 13.

The frequency of the alternating current power output from the alternating current power supply 12, that is, the switching frequency of the second switching element 12ba, is set in correspondence with the resonant frequency of the power transfer unit 13 and the power reception unit 23 so that power is transferable between the power transfer unit 13 and the power reception unit 23. For example, the frequency of the alternating current power is the same as the resonant frequency of the power transfer unit 13 and the power reception unit 23. Instead, the frequency of the alternating current power may differ from the resonant frequency of the power transfer unit 13 and the power reception unit 23 within a range in which power is transferable.

The power reception device 21 includes a rectifier 24 (AC/DC converter) that receives alternating current power received by the power reception unit 23 and rectifies the alternating current power. When the vehicle battery 22 receives the direct current power rectified by the rectifier 24, the vehicle battery 22 is charged. The vehicle battery 22 is configured by a plurality of battery cells connected in series to one another.

The power reception device 21 includes a detector 25 that detects alternating current power received by the power reception unit 23. The detector 25 transmits the detection result to a power reception controller 26, which is arranged in the power reception device 21. The power reception device 21 includes a state of charge (SOC) sensor (not shown). The SOC sensor detects the state of charge (SOC) of the vehicle battery 22 and transmits the detection result to the power reception controller 26.

The power transfer device 11 includes a power transfer controller 14 that performs various types of control for the power transfer device 11. More specifically, the power transfer controller 14 performs various types of control for circuits such as the driver circuit 12ab of the AC/DC converter 12a and the driver circuit 12bb of the DC/AC converter 12b. For example, the power transfer controller 14 instructs the driver circuit 12ab of the AC/DC converter 12a to activate and deactivate the output of direct current power and to set a set power value. When a set power value is instructed, the driver circuit 12ab of the AC/DC converter 12a adjusts a duty ratio for activating and deactivating the first switching element 12aa to output the direct current power having the set power value. In the present embodiment, the power transfer controller 14 corresponds to a "controller."

The power transfer controller 14 and the power reception controller 26 are configured to perform wireless communication with each other. The power transfer controller 14 and the power reception controller 26 exchange information with each other to perform processes such as the initiation or the termination of power transfer.

As shown in Fig. 1, the power transfer device 11 includes a control power supply 30 and a driver power supply 31. The control power supply 30 supplies power to a circuit of the power transfer controller 14 and the like. The driver power supply 31 is supplied with power from the control power supply 30 and supplies power to the driver circuit 12bb.

The control power supply 30 is arranged in parallel to the AC/DC converter 12a and configured to receive system power from the system power supply E. When receiving system power, the control power supply 30 uses the system power to generate operation power for the power transfer controller 14 and the driver power supply 31 and outputs the operation power to the power transfer controller 14 and the driver power supply 31.

The driver power supply 31 uses power from the control power supply 30 to generate operation power for the driver circuit 12bb and outputs the operation power to the driver circuit 12bb. The driver power supply 31 includes, for example, an isolation transformer. In this case, the conversion ratio of the isolation transformer may be set to any value, for example, one.

The driver circuit 12ab of the AC/DC converter 12a may be supplied with power from the driver power supply 31 or from a dedicated driver power supply that is separate from the driver power supply 31.

The power transfer device 11 includes a fan 32 serving as a cooler that functions when supplied with power from the control power supply 30 and cools the AC/DC converter 12a and the DC/AC converter 12b. A switch 33 that switches to supply and cut power to the fan 32 is arranged on a power line that connects the control power supply 30 to the fan 32. The switch 33 is on in an initial state (normal state).

As shown in Fig. 1, the DC/AC converter 12b is configured to be supplied with power from the AC/DC converter 12a or the control power supply 30. More specifically, the power transfer device 11 includes a switch relay 34 serving as a switch that switches the input source of power of the DC/AC converter 12b between the AC/DC converter 12a and the control power supply 30. That is, the switching operation of the switch relay 34 electrically connects the DC/AC converter 12b to the AC/DC converter 12a or the control power supply 30. The input source of power of the DC/AC converter 12b may be referred to as the connection destination of an input terminal of the DC/AC converter 12b.

The power value that can be output by the control power supply 30 will now be described in detail. The control power supply 30 outputs operation power to various electronic components (in the present embodiment, power transfer controller 14, driver power supply 31, and fan 32) that are subject to the supply of power from the control power supply 30. Further, the control power supply 30 is configured to output second direct current power of a second direct current power value P2, which is smaller than both of the first direct current power value P1 and the minimum power value Pmin, to the DC/AC converter 12b. More specifically, the maximum power value (rated power) that can be output by the control power supply 30 is set to be larger than a value obtained by adding the second direct current power value P2 to the sum of the power values of the operation power of the electronic components subject to the supply of power. When the control power supply 30 is the input source of power of the DC/AC converter 12b, the control power supply 30 outputs the second direct current power to the DC/AC converter 12b while supplying power to the electronic components subject to the supply of power.

In such a configuration, when the AC/DC converter 12a and the DC/AC converter 12b are connected to each other and the DC/AC converter 12b receives the first direct current power, the DC/AC converter 12b outputs the alternating current power obtained by converting the first direct current power (hereinafter referred to as first alternating current power). When the control power supply 30 and the DC/AC converter 12b are connected to each other and the DC/AC converter 12b receives the second direct current power, the DC/AC converter 12b outputs the alternating current power obtained by converting the second direct current power (hereinafter referred to as second alternating current power). The second alternating current power has a smaller power value than the first alternating current power.

The output voltage value of the control power supply 30 is smaller than a voltage value of the first direct current power, for example, 12 V or 24 V. Further, in the present embodiment, the output voltage value of the control power supply 30 is a fixed value, and the output value of the direct current power that is output from the control power supply 30 to the DC/AC converter 12b is a fixed value (second direct current power value P2). That is, even when a certain set power value is instructed from the power transfer controller 14, the control power supply 30 outputs the second direct current power, which is the direct current power of the second direct current power value P2, to the DC/AC converter 12b.

When a predetermined charge sequence initiation condition is satisfied, the power transfer controller 14 performs a charge control process for charging the vehicle battery 22 while performing wireless communication with the power reception controller 26. The charge control process will now be described in detail. Any charge sequence condition may be used such as a condition in which a request is sent from the power reception controller 26 or the vehicle is detected by a predetermined sensor.

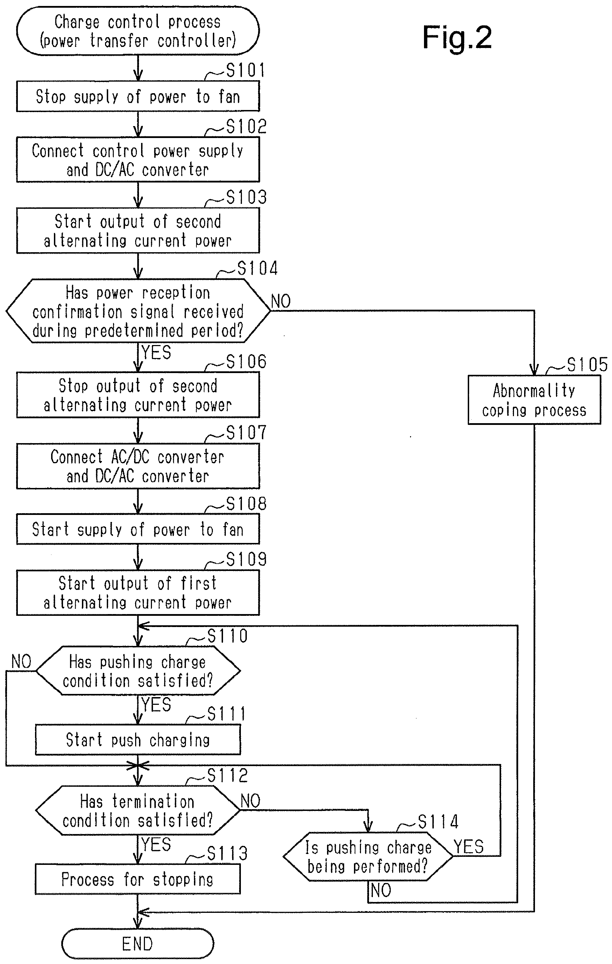

As shown in Fig. 2, in step S101, the power transfer controller 14 first stops the supply of power from the control power supply 30 to the fan 32. More specifically, the power transfer controller 14 switches the switch 33 from an activated state to a deactivated state.

Then, in step S102, the power transfer controller 14 controls the switch relay 34 so that the control power supply 30 and the DC/AC converter 12b are connected to each other. This allows the DC/AC converter 12b to receive the second direct current power. In step S103, the power transfer controller 14 controls the driver circuit 12bb of the DC/AC converter 12b so that the second alternating current power is output from the DC/AC converter 12b.

Further, the power transfer controller 14 notifies the power reception controller 26 that the second alternating current power is being output. When receiving the notification, the power reception controller 26 determines whether or not alternating current power that is greater than or equal to a predetermined threshold power value has been received by the power reception unit 23 based on a detection result of the detector 25. Then, when the alternating current power has been received, the power reception controller 26 transmits a power reception confirmation signal to the power transfer controller 14. The threshold power value may be set to any value other than zero. For example, the threshold power value may be a value obtained by multiplying the power value of the second direct current power by the threshold transmission efficiency.

Subsequently, in step S104, the power transfer controller 14 determines whether or not the power reception confirmation signal has been received from the power reception controller 26 during a predetermined period.

When the power transfer controller 14 does not receive the power reception confirmation signal during the predetermined period, the power transfer controller 14 determines that there is an abnormality in the power transfer between the power transfer device 11 (power transfer unit 13) and the power reception device 21 (power reception unit 23). Then, the power transfer controller 14 performs an abnormality coping process in step S105 and terminates the present charge control. In the abnormality coping process, the power transfer controller 14, for example, stops outputting the second alternating current power or issues an error notification.

When receiving the power reception confirmation signal during the predetermined period, the power transfer controller 14 proceeds to step S106 to stop the output of the second alternating current power. A specific process for stopping the output of the second alternating current power may be, for example, a process for controlling the driver circuit 12bb to stop cyclic activation and deactivation of the second switching element 12ba or a process for floating the switch destination of the switch relay 34.

Then, in step S107, the power transfer controller 14 controls the switch relay 34 so that the AC/DC converter 12a and the DC/AC converter 12b are connected to each other. In step S108, the power transfer controller 14 controls the switch 33 to start the supply of power from the control power supply 30 to the fan 32. This operates the fan 32.

In step S109, the power transfer controller 14 controls the driver circuit 12ab of the AC/DC converter 12a and the driver circuit 12bb of the DC/AC converter 12b so that the first alternating current power is output from the DC/AC converter 12b. As a result, the first alternating current power is transferred from the power transfer unit 13 to the power reception unit 23, rectified by the rectifier 24, and received by the vehicle battery 22. Thus, the vehicle battery 22 is charged. The charging of the vehicle battery 22 using the first alternating current power is referred to as normal charging.

Subsequently, in step S110, the power transfer controller 14 determines whether or not a push charge condition that triggers push charging has been satisfied. The push charge condition is, for example, when the state of charge (SOC) of the vehicle battery 22 is in a push charge triggering state.

In step S110, any specific process may be performed. For example, the power reception controller 26 regularly acknowledges the state of charge of the vehicle battery 22 based on the detection result of the SOC sensor when the vehicle battery 22 is being charged. When the state of charge of the vehicle battery 22 triggers push charging, the power reception controller 26 transmits a request signal for push charging to the power transfer controller 14. In such a case, when receiving the request signal, the power transfer controller 14 determines that the push charge condition has been satisfied.

When the push charge condition is not satisfied, the power transfer controller 14 proceeds to step S112. When the pushing charge condition is satisfied, the power transfer controller 14 starts push charging in step S111 and proceeds to step S112. More specifically, the power transfer controller 14 first stops the output of the first alternating current power. Then, the power transfer controller 14 controls the switch 33 to stop the supply of power from the control power supply 30 to the fan 32 and switches the switch relay 34 so that the connection destination of the DC/AC converter 12b is changed to the control power supply 30. Further, the power transfer controller 14 controls the driver circuit 12bb so that the second alternating current power is output from the DC/AC converter 12b. This charges the vehicle battery 22 with power having a smaller power value than that of normal charging. Push charging refers to charging of the vehicle battery 22 performed when the push charge condition is satisfied but the termination condition is not satisfied.

In step S112, the power transfer controller 14 determines whether or not a condition for terminating the charging of the vehicle battery 22 has been satisfied. The termination condition is, for example, when the state of charge of the vehicle battery 22 triggers termination or when an abnormality occurs.

When the termination condition is satisfied, in step S113, the power transfer controller 14 performs a process for stopping the output of alternating current power and terminates the present charge control process. When the termination condition is not satisfied, the power transfer controller 14 proceeds to step S114 and determines whether or not push charging is being performed. When push charging is being performed, the power transfer controller 14 returns to step S112. When push charging is not being performed, that is, when normal charging is being performed, the power transfer controller 14 returns to step S110.

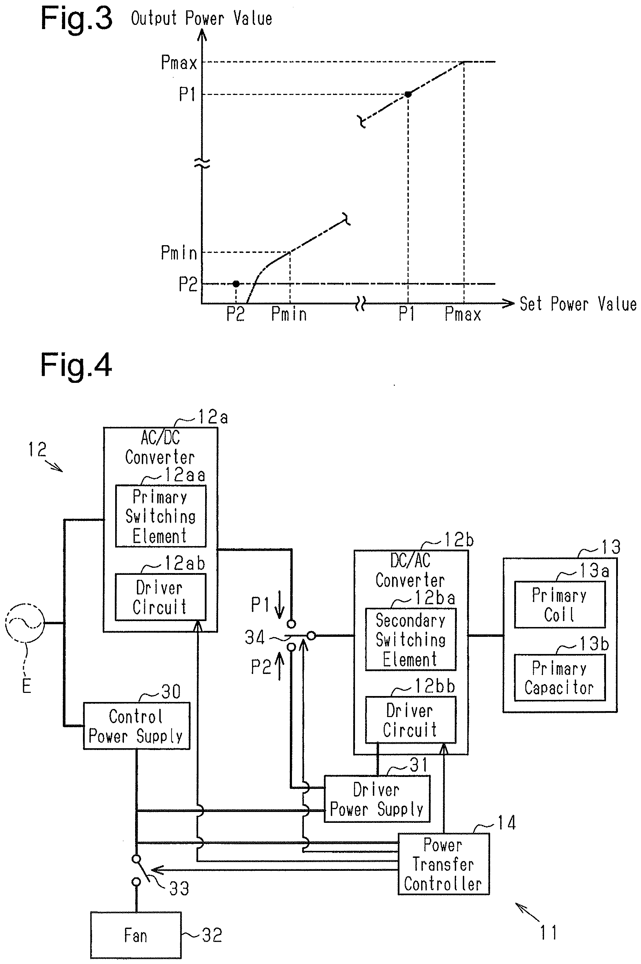

The operation of the present embodiment will now be described with reference to Fig. 3. Fig. 3 is a graph showing the relationship of a set power value and an output power value in the AC/DC converter 12a and the control power supply 30. In other words, the graph of Fig. 3 shows the power value of the direct current power that is actually output from the AC/DC converter 12a and the control power supply 30 when the AC/DC converter 12a and the control power supply 30 operate to output the direct current power of a set power value to the DC/AC converter 12b.

As shown by the double-dashed line in Fig. 3, the AC/DC converter 12a is capable of outputting direct current power in the range from the minimum power value Pmin to the maximum power value Pmax. Thus, when the set power value ranges from the minimum power value Pmin to the maximum power value Pmax, the same direct current power as the set power value is output from the AC/DC converter 12a. Since the first direct current power value P1 is a value between the minimum power value Pmin and the maximum power value Pmax, the first direct current power can be output by using the AC/DC converter 12a.

However, when the set power value becomes smaller than the minimum power value Pmin, it is difficult to control the pulse width of the first switching element 12aa of the AC/DC converter 12a. Further, the influence of the rising time and the falling time of the first switching element 12aa cannot be ignored. Thus, when the set power value becomes smaller than the minimum power value Pmin as shown by the double-dashed line in Fig. 3, the AC/DC converter 12a is not able to output the same direct current power as the set power value.

In contrast, as shown by the single-dashed line in Fig. 3, the control power supply 30 outputs the direct current power (second direct current power) of the second direct current power value P2, which is smaller than the minimum power value Pmin. Thus, the use of the control power supply 30 allows for the output of direct current power having a small power value that cannot be output by the AC/DC converter 12a.

The present embodiment has the advantages described below.
(1) The power transfer device 11 includes the DC/AC converter 12b that converts direct current power into alternating current power and outputs the alternating current power to the power transfer unit 13 (primary coil 13a). The power transfer device 11 includes the AC/DC converter 12a and the control power supply 30 that output direct current power to the DC/AC converter 12b. The AC/DC converter 12a is configured to convert system power into the first direct current power. The control power supply 30 supplies power to a circuit of the power transfer controller 14 and the like and is configured to output the second direct current power, which has a smaller power value than the first direct current power. The power transfer device 11 includes the switch relay 34 that switches the input source of power of the DC/AC converter 12b to the AC/DC converter 12a or the control power supply 30. The DC/AC converter 12b outputs the first alternating current power when receiving the first direct current power from the AC/DC converter 12a and outputs the second alternating current power, which has a smaller power value than the first alternating current power, when receiving the second direct current power from the control power supply 30. This allows for selective and preferred output of one of the first alternating current power and the second alternating current power, which have different power values, from the alternating current power supply 12 (DC/AC converter 12b).
   Further, the control power supply 30 that supplies power to the power transfer controller 14 is used to output the second alternating current power. This simplifies the configuration as compared to when using a separate dedicated power supply.
(2) The power reception device 21 is installed in the vehicle, and the alternating current power received by the power reception unit 23 is used to charge the vehicle battery 22. In such a case, the capacity of the vehicle battery 22 installed in the vehicle is so large that the order differs from the capacity of a battery used in an electric device such as a cellular phone. To charge the vehicle battery 22 having such a large capacity within a short period, the alternating current power supply 12 needs to output alternating current power (first alternating current power) having a relatively large power value. Thus, a converter having a relatively high rated power is used as the AC/DC converter 12a. However, as described above, it is difficult for the AC/DC converter 12a to output direct current power having a small power value. This may result in an undesirable situation in which push charging using the second alternating current power cannot be performed in a preferred manner.
   In the present embodiment, the control power supply 30 is used so that the DC/AC converter 12b receives the second direct current power having a smaller power value than the minimum power value Pmin that can be output by the AC/DC converter 12a. This avoids the undesirable situation described above.
(3) The AC/DC converter 12a is of a step-up type. The step-up AC/DC converter 12 tends to be smaller in size than a step-up/down converter. Thus, the AC/DC converter 12a may be smaller in size than a structure that uses a step-up/down converter.
   When the AC/DC converter 12a is of a step-up type, the minimum power value Pmin that can be output by the AC/DC converter 12a easily increases. Thus, the step-up AC/DC converter 12a may not be able to provide the power value (second direct current power value P2) that is required for push charging and transmission determination.
   In the present embodiment, as described above, the use of the control power supply 30 instead of the AC/DC converter 12a provides the power value required for push charging and the transmission determination. Thus, the power value required for push charging and the transmission determination is provided while reducing the size of the AC/DC converter 12a.
(4) When the input source of power of the DC/AC converter 12b is the control power supply 30, the control power supply 30 outputs the second direct current power to the DC/AC converter 12b while supplying power to a circuit of the power transfer controller 14 and the like. This avoids an undesirable situation in which the supply of power to the power transfer controller 14 is stopped to output the second alternating current power from the alternating current power supply 12.
(5) When the input source of power of the DC/AC converter 12b is the control power supply 30, the power transfer controller 14 performs a transmission determination on whether or not power is transferred from the power transfer unit 13 to the power reception unit 23, more specifically, whether or not alternating current power is received by the power reception unit 23 (step S104). When determining that power is transferred from the power transfer unit 13 to the power reception unit 23, the power transfer controller 14 controls the switch relay 34 to switch the input source of power of the DC/AC converter 12b from the control power supply 30 to the DC/AC converter 12b. This performs the transmission determination with the second alternating current power that has a relatively small current value. Thus, power loss resulting from the transmission determination can be reduced. When the determination result shows that the transmission determination is an affirmative determination, the input source of power of the DC/AC converter 12b is switched to the AC/DC converter 12a. Accordingly, the first alternating current power having a relatively large power value can be transferred from the power transfer device 11 to the power reception device 21.
   In particular, when the transmission determination is performed using the first alternating current power that has a relatively large power value, depending on the positional relationship of the coils 13a and 23a, the excessively low transmission efficiency may excessively increase the power value of reflected wave power and increase the burden on the alternating current power supply 12. In the present embodiment, the transmission determination is performed using the second alternating current power. This reduces situations in which an excessive burden is applied to the alternating current power supply 12 even when the transmission efficiency is too low as described above.
(6) The power transfer device 11 includes the fan 32 that functions when supplied with power from the control power supply 30 and cools the DC/AC converter 12b. When the input source of power of the DC/AC converter 12b is the control power supply 30, the power transfer controller 14 stops the supply of power from the control power supply 30 to the fan 32. This reduces the power load on the control power supply 30. In such a case, the DC/AC converter 12b receives the second direct current power, which is direct current power having a relatively small power value. Thus, the temperature increase in the DC/AC converter 12b is relatively small. This reduces the adverse effect that would be caused by stopping the supply of power to the fan 32.

The above embodiment may be modified as follows.

As shown in Fig. 4, the driver power supply 31 and the switch relay 34 may be connected to each other. In this case, the DC/AC converter 12b is connected to the control power supply 30 via the driver power supply 31. The DC/AC converter 12b is supplied with power from the control power supply 30 via the driver power supply 31. In other words, a case in which the DC/AC converter 12b receives the second direct current power from the control power supply 30, that is, a case in which the input source of power of the DC/AC converter 12b is the control power supply 30, includes a configuration in which the control power supply 30 is directly connected to the DC/AC converter 12b and a configuration in which the control power supply 30 is indirectly connected to the DC/AC converter 12b via the driver power supply 31.

In addition to the driver power supply 31 that supplies power to the driver circuit 12bb of the DC/AC converter 12b, the power transfer device 11 may include an additional driver power supply that is supplied with power from the control power supply 30 and supplies power to an additional driver circuit. In such a case, the additional driver power supply may be configured to output the second direct current power to the DC/AC converter 12b. Further, the DC/AC converter 12b may be supplied with power not only from the driver power supply but also from the control power supply 30 via a predetermined electronic component.

The control power supply 30 may be a power storage device such as a battery.

The control power supply 30 supplies power to the power transfer controller 14. Instead, the control power supply 30 may supply power to, for example, a controlling controller that controls another electronic component arranged in the power transfer device 11. Further, the "controller" supplied with power from the control power supply 30 may control any subject.

When the control power supply 30 is connected to the DC/AC converter 12b, the control power supply 30 may stop supplying power to the power transfer controller 14. In this case, a separate power storage device such as a battery or a capacitor may be arranged in the power transfer device 11, and the power transfer controller 14 may operate using the power of the power storage device when the supply of power from the control power supply 30 is stopped.

In the embodiment, the power transfer controller 14 is configured to perform the transmission determination before performing normal charging. However, the power transfer controller 14 does not have to perform the transmission determination.

The power value of the alternating current power used for the transmission determination may differ from the power value of the alternating current power used for push charging. More specifically, for example, the control power supply 30 may be configured so that the power value of the direct current power that is output to the DC/AC converter 12b is variable. During the transmission determination, the power transfer controller 14 may instruct the control power supply 30 to output transmission determination power from the control power supply 30 to the DC/AC converter 12b. During push charging, the power transfer controller 14 may instruct the control power supply 30 to output push charging power from the control power supply 30 to the DC/AC converter 12b.

In the embodiment, the control power supply 30 is used to perform both of the transmission determination and push charging. Instead, the control power supply 30 may be used to perform only one of the transmission determination and push charging, and the AC/DC converter 12a may be used to perform the other one of the transmission determination and push charging.

The second alternating current power is not limited to the transmission determination and push charging and may be used for any purpose.

The AC/DC converter 12a is not limited to a step-up type and may be a step-up/down type. However, to reduce the size of the alternating current power supply 12, it is preferred that the AC/DC converter 12a be of a step-up type.

The AC/DC converter 12a is configured so that the power value of output direct current power is variable. Instead, the AC/DC converter 12a may be configured to output only a first direct current power of a fixed value.

The external power is not limited to system power and may be any power. For example, the external power may be direct current power. In this case, the AC/DC converter 12a may be replaced with a DC/DC converter. In this example, the DC/DC converter corresponds to the first converter.

The fan 32 is used as a cooler that cools the AC/DC converter 12a and the DC/AC converter 12b. However, any device may be used as long as the device performs cooling. For example, a pump that circulates coolant may be used.

Further, the cooling subject may be only the DC/AC converter 12b. It is only necessary that the cooling subject include at least the DC/AC converter 12b.

When the DC/AC converter 12b is connected to the control power supply 30, the supply of power from the control power supply 30 to the fan 32 is stopped. However, the supply of power may be continued. In this case, it is preferred that the control power supply 30 have a sufficiently large rated power so that the consumption power (power supplied from control power supply 30) does not exceed the rated power.

A filter circuit that eliminates the switching noise of the second switching element 12ba of the DC/AC converter 12b may be arranged between the control power supply 30 and the switch relay 34. More specifically, the filter circuit may be a low-pass filter that eliminates noise having the switching frequency of the second switching element 12ba or greater. This limits propagation of noise that would be produced in the DC/AC converter 12b to the control power supply 30 and thus limits propagation of noise from the control power supply 30 to various electronic components (for example, power transfer controller 14).

The power transfer device 11 may include a primary impedance converter arranged between the DC/AC converter 12b and the power transfer unit 13. In the same manner, the power reception device 21 may include a secondary impedance converter arranged between the power reception unit 23 and the rectifier 24. Further, the power reception device 21 may include a DC/DC converter arranged between the rectifier 24 and the vehicle battery 22.

The detector 25 may detect direct current power that is rectified by the rectifier 24.

The AC/DC converter 12a and the DC/AC converter 12b may have any specific configuration. The number of each of the switching elements 12aa and 12ba may be one or more.

For example, the DC/AC converter 12b may include a bridge circuit including four second switching elements 12ba. In this case, the DC/AC converter 12b outputs the first alternating current power in a full-bridge mode in which the four second switching elements 12ba are all activated and deactivated and outputs the second alternating current power in a half-bridge mode in which two of the four second switching elements 12ba are alternately activated and deactivated. This allows the second alternating current power to be output in a further preferred manner.

The transmission determination may process any specific content. For example, after receiving a notification that the second alternating current power is being output, the power reception controller 26 may transmit a power non-receivable signal when alternating current power is not received by the power reception unit 23. In this case, when receiving a power non-receivable signal, the power transfer controller 14 may perform the abnormality coping process without waiting for a predetermined period.

The charge control is performed not only by the power transfer controller 14 but also by any device such as the power reception controller 26. In this case, the power transfer controller 14 transmits the information necessary for the charge control process to the power reception controller 26. Further, the power reception controller 26 gives various instructions to the power transfer controller 14 when necessary, and the power transfer controller 14 controls a circuit of the DC/AC converter 12b, the AC/DC converter 12a, or the like in accordance with the various instructions.

The isolation transformer may be arranged between the system power supply E and the control power supply 30. Alternatively, the isolation transformer may be arranged between the control power supply 30 and the driver power supply 31.

The second direct current power value P2 may be larger than the minimum power value Pmin. In this case, when the second direct current power value P2 is close to the minimum power value Pmin, an output voltage waveform and an output current waveform from the AC/DC converter 12a may be distorted. Thus, even when the second direct current power value P2 may be larger than the minimum power value Pmin, it is preferred that the second direct current power be output using the control power supply 30.

The alternating current power supply 12 is not limited to a voltage source and may be a power source or a current source.

The power transfer unit 13 and the power reception unit 23 have the same resonant frequency. Instead, the power transfer unit 13 and the power reception unit 23 may have different resonant frequencies within a range in which power is transferable.

The power transfer unit 13 and the power reception unit 23 have the same configuration. Instead, the power transfer unit 13 and the power reception unit 23 may have different configurations.

The capacitors 13b and 23b may be omitted. In this case, a parasitic capacity of each of the coils 13a and 23a is used so that magnetic resonance occurs.

The power reception device 21 may be arranged in any subject. For example, the power reception device 21 may be arranged in a robot or an electric wheelchair.

In the embodiment, the primary coil 13a and the primary capacitor 13b are connected to each other in parallel. Instead, the primary coil 13a and the primary capacitor 13b may be connected in series. In the same manner, the secondary coil 23a and the secondary capacitor 23b may be connected in series.

In the embodiment, magnetic resonance is used to realize wireless power transfer. Instead, electromagnetic induction may be used.

In the embodiment, the alternating current power received by the power reception unit 23 is used to charge the vehicle battery 22. Instead, the alternating current power received by the power reception unit 23 may be used for different purposes.

The power transfer unit 13 may include a resonant circuit including the primary coil 13a and the primary capacitor 13b and a primary coupling coil to which the resonant circuit is coupled through electromagnetic induction. In the same manner, the power reception unit 23 may include a resonant circuit including the secondary coil 23a and the secondary capacitor 23b and a secondary coupling coil to which the resonant circuit is coupled through electromagnetic induction.

## Claims

1. A power transfer device configured to transfer alternating current power to a secondary coil of a power reception device through wireless connection, the power transfer device comprising:
an alternating current power supply including a first converter that converts external power into first direct current power and a second converter that converts direct current power into alternating current power having a predetermined frequency and outputs the alternating current power;
a primary coil that receives the alternating current power;
a controller that controls the power transfer device, wherein the controller is arranged in the power transfer device;
a control power supply that supplies power to the controller, wherein the control power supply is capable of outputting second direct current power, which has a smaller power value than the first direct current power, to the second converter; and
a switch that switches an input source of power of the second converter between the first converter and the control power supply, wherein
the second converter outputs first alternating current power as the alternating current power when receiving the first direct current power from the first converter and outputs second alternating current power, which has a smaller power value than the first alternating current power, as the alternating current power when receiving the second direct current power from the control power supply.

2. The power transfer device according to claim 1, wherein when the input source of power of the second converter is the control power supply, the control power supply outputs the second direct current power to the second converter while supplying power to the controller.

3. The power transfer device according to claim 1 or 2, wherein
when the input source of power of the second converter is the control power supply, the controller performs a transmission determination to determine whether or not power is transferred from the primary coil to the secondary coil, and
when determined by the transmission determination that power is transferred from the primary coil to the secondary coil, the controller switches the input source of power of the second converter from the control power supply to the first converter.

4. The power transfer device according to any one of claims 1 to 3, further comprising a cooler that functions when supplied with power from the control power supply and cools the second converter, wherein
when the input source of power of the second converter is the control power supply, supply of power from the control power supply to the cooler is stopped.

5. The power transfer device according to any one of claims 1 to 4, wherein
the first converter is configured to change a power value of output direct current power, and
a power value of the first direct current power is larger than a minimum power value that the first converter is capable of outputting, and a power value of the second direct current power is smaller than the minimum power value.

6. The power transfer device according to any one of claims 1 to 5, further comprising:
a driver circuit arranged in the power transfer device; and
a driver power supply that is supplied with power from the control power supply, wherein the driver power supply supplies power to the driver circuit,
wherein the control power supply is connected to the second converter via the driver power supply.

7. The power transfer device according to any one of claims 1 to 6, further comprising a filter circuit arranged between the control power supply and the switch.

8. A wireless power transfer apparatus that transfers alternating current power from a power transfer device to a power reception device through wireless connection, the wireless power transfer apparatus comprising:
an alternating current power supply arranged in the power transfer device, wherein the alternating current power supply includes a first converter that converts external power into first direct current power and a second converter that converts direct current power into alternating current power having a predetermined frequency and outputs the alternating current power;
a primary coil that receives the alternating current power, wherein the primary coil is arranged in the power transfer device;
a secondary coil configured to receive the alternating current power received by the primary coil through wireless connection, wherein the secondary coil is arranged in the power reception device;
a controller arranged in the power transfer device;
a control power supply supplies power to the controller, wherein the control power supply is configured to output second direct current power that has a smaller power value than the first direct current power; and
a switch that switches an input source of power of the second converter between the first converter and the control power supply, wherein
the second converter outputs first alternating current power as the alternating current power when receiving the first direct current power from the first converter and outputs second alternating current power, which has a smaller power value than the first alternating current power, as the alternating current power when receiving the second direct current power from the control power supply.
